# EUROPÄISCHE PATENTSCHRIFT

(11) **EP 3 107 877 B1**
(45) Veröffentlichungstag und Bekanntmachung des Hinweises auf die Patenterteilung: **24.04.2019**
(21) Anmeldenummer: 15708114.2
(22) Anmeldetag: 20.02.2015
(51) Int. Cl.: C04B 28/02, C04B 28/04, C04B 40/06, E01C 7/26, C04B 111/00, C04B 111/10

(54) **TROCKENMÖRTEL, MÖRTELSLURRY UND VERFAHREN ZUR HERSTELLUNG VON HALBSTARREN BELÄGEN**
DRY MORTAR, MORTAR SLURRY AND METHOD FOR THE PREPARATION OF SEMI-RIGID COATINGS
MORTIER SEC, COULIS DE MORTIER ET PROCÉDÉ DE FABRICATION DE REVÊTEMENTS SEMI-RIGIDES

(30) Priorität: 22.02.2014 EP 14000628
(43) Veröffentlichungstag der Anmeldung: 28.12.2016
(73) Patentinhaber: HeidelbergCement AG, 69120 Heidelberg (DE)
(72) Erfinder: WORTMANN, Kai, 69151 Neckargemuend (DE); OBST, Frank, 59075 Hamm (DE); WAGNER, Eckhard, 69120 Heidelberg (DE); SCHOENE, Stefan, 69115 Heidelberg (DE)
(74) Vertreter: Zellentin & Partner mbB Patentanwälte
(86) Internationale Anmeldenummer: PCT/EP2015/000391
(87) Internationale Veröffentlichungsnummer: WO 2015/124313

(56) Entgegenhaltungen:
- WO-A1-2012/000773
- WO-A2-2008/128120
- DE-A1- 4 205 354
- DE-A1- 19 854 478
- JP-A- H 101 345
- JP-A- H 101 346
- JP-A- 2005 194 117
- US-A- 6 033 469

## Beschreibung

Die vorliegende Erfindung betrifft einen Trockenmörtel und eine Mörtelslurry daraus sowie ein Verfahren zur Herstellung von halbstarren Belägen.

Unter einer halbstarren Deckschicht bzw. einem halbstarren Belag ist ein vermörtelter, bitumengebundener Bodenbelag zu verstehen. Der halbstarre Belag besteht aus einem bitumengebundenen Traggerüst, kurz Asphalttraggerüst, dessen Hohlraumgehalt typischerweise im Bereich von 10 bis 40 Vol- % liegt und das mit einem dünnflüssigen, hochfesten (≥ 100 N/mm² n. 28 d) Mörtel gefüllt wird.

Der Belag vereint bei richtiger Ausführung die Flexibilität des Asphalts mit der Festigkeit des Betons. Das Bindemittel ist schwindkompensiert und schnellabbindend. Auf Grund der schnellen Festigkeitsentwicklung kann der halbstarre Belag je nach Temperatur (bei ca. 20 °C) bereits nach 12 bis 24 Stunden benutzt werden. Die Druckfestigkeit des fertigen Belages beträgt ca. 10 N/mm². Ein Vorteil des halbstarren Belages ist die Ausführbarkeit ohne Fugen.

Der halbstarre Belag wird meistens bei hoher Beanspruchung verwendet, wo herkömmlicher Asphalt nicht ausreichend ist, oder wo die Fugen beim Beton problematisch sind. Er ist für lange andauernde Belastungen und für Anwendungsgebiete mit sehr großen Temperaturschwankungen geeignet. Außerdem besitzt er eine sehr dichte Oberfläche und ist deswegen frost - und tausalz beständig.

In der Regel werden nur die oberen Schichten einer Verkehrsfläche in Form eines halbstarren Belages ausgeführt, da hiermit vor allem der Widerstand gegen bleibende Verformung erhöht werden soll. Beispielsweise zeigt der Belag im Vergleich zu Asphalt kaum Spurrinnenbildung oder Eindrücke von Punktlasten. Die darunter befindlichen Tragschichten werden meistens in üblicher Bauweise als asphalt- oder zementgebundene Tragschichten ausgeführt.

Den derzeitigen Stand der Technik in Bezug auf halbstarre Beläge fasst z.B. das "Merkblatt für die Herstellung von halbstaren Deckschichten" der Forschungsgesellschaft für Straßen und Verkehrswesen e.V., Ausgabe 2010, ISBN 978-3-941790-51-3 zusammen. Demgemäß ist in einem Mörtel für halbstarre Beläge als Bindemittel Zement (nach DIN EN 197 oder mit bauaufsichtlicher Zulassung) mit Feinstbindemittel und/oder Silikastaub zu verwenden, mit einem Größtkorn < 0,25 mm (DIN EN 12620). An die Eigenschaften des Frischmörtels sowie des Festmörtels werden die in Tabelle 1 aufgelisteten, spezifischen Anforderungen gestellt:

**Tabelle 1**

| Materialkennwerte | Anforderung | Prüfverfahren |
|---|---|---|
| Fließvermögen | sofort ≤ 45 s | Ausflusszeit DIN EN 445, |
| Frischmörtel: | nach 60 min. ≤ 55 s | Abschnitt 4.3.1 |
| Volumenänderung am Prisma Festmörtel | ≤ 0,5 % | DIN 52450 |
| Druckfestigkeit | nach 24 h ≥ 40 N/mm² | DIN EN 196-1 |
| | nach 3d ≥ 65 N/mm² | |
| | nach 28 d ≥ 100 N/mm² | |
| Biegezugfestigkeit | nach 24 h ≥ 5 N/mm² | DIN EN 196-1 |
| | nach 3d ≥ 10 N/mm² | |
| | nach 28 d ≥ 12 N/mm² | |

Die Erstellung von halbstarren Belägen erfolgt indem ein Asphalt mit einem hohen Hohlraumanteil, üblich sind 10 bis 40 %, insbesondere 20 bis 35 %, auf einem geeigneten Unterbau erstellt wird. Die Fertigung sollte maschinell erfolgen, da für die Verfüllung mit Mörtel eine besonders ebene Oberfläche nötig ist. Die Asphaltdicke liegt üblicherweise bei 2 bis 10 cm, bevorzugt bei 4 bis 6 cm.

Der Mörtel wird als Slurry, d.h. als Mischung von Zement, Feinstkomponente und ggfs. Füllstoff, mit Wasser aber im wesentlichen ohne Gesteinskörnungen, aufgebracht, dazu muss die Mörtelslurry eine besonders hohe Fließfähigkeit aufweisen. Ein Problem ist, dass der Auftrag erst erfolgen kann, wenn der Asphalt auf 30 °C oder weniger abgekühlt ist. Wird die Mörtelslurry bei höheren Asphalttemperaturen aufgetragen, so kann eine zu schnelle Erhärtung und/oder eine zu starke Abnahme der Fließfähigkeit eintreten. Beides kann eine unzureichende Hohlraumfüllung nach sich ziehen. Da die Temperatur des Asphalts zum Zeitpunkt des Einbaus deutlich darüber liegt (Temperaturen von über 100 °C sind möglich), verzögert die notwendige Abkühlzeit den Baufortschritt.

Ein weiteres Problem der Bauweise der halbstarren Beläge mit Mörtelslurries besteht in der Anwendung auf Flächen und Strecken mit Gefälle. Auf Gefällestrecken können nur kleine Bereiche verfüllt werden und/oder die Mörtelslurry muss bis zum Ansteifen stetig gegen das Gefälle zurückgezogen werden. Weiterhin führen unzureichende Abdichtungen von z.B. Randeinfassungen oder Gully-Einläufen aufgrund der Dünnflüssigkeit des Mörtels über längere Einbauzeiträume hinweg zu einem unkontrollierbarem Austritt der Mörtelslurry aus dem Traggerüst. Fehlstellen, Nacharbeiten und somit Bauzeitverlängerungen sind die Folge.

Es wäre daher wünschenswert, eine Mörtelslurry zur Verfügung zu haben, welche sich bei höheren Temperaturen als 30 °C, z.B. bei Temperaturen von 55 °C oder höher, einbauen lässt. Außerdem wäre es ideal, wenn die Mörtelslurry für Gefälle einsetzbar wäre und bei nicht ausreichender Abdichtung nicht oder maximal in vernachlässigbar geringer Menge ausliefe.

Es sind schon Vorschläge gemacht worden, wie halbstarre Beläge verbessert werden können. So lehrt die WO 02/75052 A1 den Belag mit einer Armierung zu versehen, um die Festigkeit des Belags zu verbessern.

Gemäß WO 2009/133094 A1 soll der Belag durch Zusatz eines Photokatalysators wie Titandioxid die Zusatzfunktion der Luftreinigung erhalten. Titandioxid kann bei Bestrahlung mit Sonnenlicht Schadstoffe, vor allem Stickoxide, katalytisch spalten. Die Mörtelslurry in WO 2009/133094 A1 soll Zement, Photokatalysator, Verflüssiger, Viskositätsregler und Entschäumer enthalten. Die o.g. Probleme sind in diesen Schriften nicht angesprochen.

Aus WO 2008/128120 A1 sind Mörtel für halbstarre Beläge bekannt, welche 15 - 50 % Portlandzement, 5 - 50 % Sand, 0 - 40 % Calciumcarbonat, 0 - 2 % Beschleuniger, 0,02 - 1 % Verflüssiger, 0,02 - 1 % Wasserrückhaltemittel bzw. Rheologiehilfsmitel, 0 - 0,8 % Entschäumer und 1 - 10 % dispergierbares Polymer enthalten sollen. Von diesen Mischungen heißt es, dass sie bereits bei 125 °F, also etwa 52 °C, eingebaut werden könnten, eine Abkühlung über Nacht wird trotzdem empfohlen. Ein ähnlicher Belag, der bei 50 °C einbaubar sein soll, wird in JP H10-1345 beschrieben. Diese Mörtel mit Gesteinskönung haben im Vergleich zu Mörtelslurries einen viel niedrigeren Zementgehalt, die bei Mörtelslurries mit hohen Temperaturen auftretenden Probleme werden durch die Verdünnung mit Gesteinskörnung gelöst oder zumindest verringert. Dafür sind die erreichbaren Festigkeiten deutlich geringer und entsprechen nicht den Anforderungen für halbstarre Beläge aus Mörtelslurries für Deutschland.

Überraschend wurde nun gefunden, dass eine Mörtelslurry aus Zement mit Feinstanteil, die zumindest ein Fließmittel enthält, aber frei von Silikastaub ist, bereits bei Asphalttemperaturen von 80 °C eingebracht werden kann. Setzt man einer Mörtelslurry ein Geliermittel zu, ergibt sich eine latent thixotrope Mörtelslurry, welche auf Gefällestrecken eingebaut werden kann und nicht oder in vernachlässigbar geringer Menge aus dem Traggerüst herausfließt.

Die Aufgabe, eine temperaturbeständigere Mörtelslurry zu finden, wird daher gelöst durch einen Trockenmörtel, der mindestens 62 Gew.-% Zement und Feinstzement als Feinstkomponente enthält und frei von Silikastaub ist und der mit Wasser zu der Mörtelslurry vermischt wird, wobei zumindest ein Fließmittel im Trockenmörtel oder im Wasser enthalten ist oder mit dem Wasser zusammen zugefügt wird, wobei die Mörtelslurry ein Verhältnis Trockensubstanz:Wasser von 1:0,28 bis 1:0,36 aufweist und die Druckfestigkeit des Festmörtels aus der Mörtelslurry nach 28 Tagen mindestens 100 N/mm² beträgt.

Als Zement kommen vor allem Zemente gemäß DIN EN 197 oder vergleichbaren Normen in Betracht. Bevorzugt sind Portlandzement und Portlandzement im Gemisch mit latent-hydraulischen und/oder puzzolanischen Materialien wie Flugasche, Hüttensand und natürlichen Puzzolanen. Besonders bevorzugte Zemente weisen eine hohe Mahlfeinheit und eine ausgewählte Partikelgrößenverteilung auf mit hohen Festigkeitsentwicklungen, insbesondere mindestens der Festigkeitsklasse 42.5 R bevorzugt der Festigkeitsklasse 52.5 R oder N. Besonders bevorzugte Zemente sind solche der Zementklassen CEM I, CEM II/A-LL, CEM II/B-LL, CEM II/A-V, CEM II/B-V, CEM II/A-S, CEM II/B-S, insbesondere CEM II/A, CEM II/B, CEM III/A, CEM IV/A und CEM V/A mit Ausnahme von CEM II/A-D. Erfindungsgemäß sind mindestens 62 Gew.-% Zement, bevorzugt mindestens 88 Gew.-% Zement enthalten. Der Zementgehalt kann bis 99,5 % betragen, vorzugsweise bis 94 Gew.-%. Insbesondere sind von 88 bis 94 Gew.-% Zement enthalten.

Der Trockenmörtel enthält wie an sich bekannt eine Feinstkomponente, erfindungsgemäß Feinstzement wie z.B. die Feinstanteile der Komponente Zement, jedoch keinen Silikastaub. Erfindungsgemäß wurde gefunden, dass ohne den Gehalt an Silikastaub die Probleme, die sich ergeben, wenn die Mörtelslurry bei Asphalttemperaturen oberhalb von 30 °C eingebaut wird, vermieden werden können, wenn die Mörtelslurry ein Fließmittel enthält. Eine solche Erkenntnis ist im Stand der Technik nicht zu finden. WO 02/075052 A1 empfiehlt Mörtelslurries mit Silikastaub. In WO 2009/133094 A1 wird trotz des Hinweises, dass Silikastaub nicht notwendig sei, ein Einbau der Mörtelslurry erst nach 24 h Abkühlzeit beschrieben. Es war in keiner Weise zu erwarten oder zu vermuten, dass bei Anwesenheit zumindest eines Fließmittel durch Ausschluss von Silikastaub eine problemlos bei 55 bis bis 80 °C verarbeitbare und einbaubare Mörtelslurry erhalten wird, die in der Lage ist den Hohlraumgehalt des Asphalttraggerüstes vollständig und lückenlos zu verfüllen. Silikastaub meint im Rahmen der Erfindung Silikastaub gemäß DIN EN 13263.

Der Trockenmörtel kann weiterhin inerte, anorganische Füller wie Kalksteinmehl und/oder andere Mineralstoffe oder Mineralstoffgemische enthalten. Diese werden üblicherweise in Mengen im Bereich von 0,1 bis 35 Gew.-% bezogen auf die Trockenmasse der Mörtelslurry, insbesondere von 3 bis 10 Gew.-%, eingesetzt. Es sind jedoch im wesentlichen keine Gesteinskörnungen wie Sand enthalten.

In der Mörtelsurry, insbesondere im Trockenmörtel, sind verflüssigende Zusatzmittel enthalten. Geeignet sind beispielsweise solche auf Basis von Ligninsulfonaten, Melaminharzen, (Poly-)Naphthalinsulfonaten und/oder als Polycarboxylatether (PCE) bezeichnete Stoffe oder Stoffgemische, Acrylbasierte Stoffe oder Stoffgemische, Vinyl-basierte Stoffe oder Stoffgemische, Carbonsäurebasierte Stoffe oder Stoffgemische, sowie Derivate und/oder eine Mischung aus diesen. Vorzugsweise werden das/die verflüssigenden Zusatzmittel in Mengen im Bereich von 0,5 bis 5 Gew.-% bezogen auf die Trockenmasse der Mörtelslurry, insbesondere von 0,6 bis 1 Gew.-%, eingesetzt.

In der Mörtelslurry können organische und/oder anorganische Verzögerer wie z.B. Fruchtsäuren, vorzugsweise Gluconate, und Phosphate zum Einsatz kommen. Diese werden in der Regel in Mengen im Bereich von 0,01 bis 2 Gew.-% bezogen auf die Trockenmasse der Mörtelslurry, insbesondere von 0,01 bis 0,05 Gew.-%, eingesetzt.

Weiterhin können zur farblichen Ausgestaltung der Mörtel handelsübliche Farbpigmente enthalten sein, z.B. für bunte Mörtel Pigmente auf Basis von Eisenoxid und für schwarze Mörtel Pigmente auf Basis von Eisenoxid und/oder Kohlenstoff (Ruß). Wenn Pigmente verwendet werden, kommen sie in den an sich bekannten, üblichen Mengen zum Einsatz.

Es können auch andere an sich bekannte Zusatzmittel und/oder Zusatzstoffe enthalten sein, was aber nicht üblich und nicht bevorzugt ist.

Der Trockenmörtel wird zum Erhalt der Mörtelslurry in einem Verhältnis Trockensubstanz:Wasser im Bereich von 1:0,28 bis 1:0,36, vorzugsweise im Bereich von 1:0,28 bis 1:0,31 vermischt.

Die Trockensubstanz der Mörtelslurry ist normalerweise und bevorzugt ein fertiges Gemisch, welches zur Anwendung nur noch mit Wasser vermischt wird. Einzelne Komponenten können auch beim oder kurz vor dem Anmachen mit Wasser separat oder als Komponentengemisch zugefügt werden, z.B. flüssige Zusatzmittel, Pigmente etc. Ein fertiges Trockengemisch hat jedoch mehrere Vorteile, es reduziert mögliche Fehler bei der Dosierung und kann im Zementwerk mit größerer Genauigkeit als auf der Baustelle angemischt werden. Auch der Grad der Homogenisierung wird durch eine Vormischung im Werk verbessert. Erfindungsgemäß werden daher außer dem Wasser bevorzugt nur trockene Komponenten verwendet, die vorzugsweise als fertiges Trockengemisch bereitgestellt werden.

Eine erfindungsgemäße Mörtelslurry kann bei Temperaturen von 55 °C bis maximal 80 °C, also ohne oder nach kurzer Abkühlzeit, in das Asphalttraggerüst eingebracht werden und verfüllt die Hohlräume vollständig. Es kommt überraschenderweise nicht zu einem vorzeitigen Erstarren/Erhärten oder einer relevanten Abnahme der Fließfähigkeit.

Weiterhin ist es möglich, das Fließverhalten der erfindungsgemäßen Mörtelslurry zu optimieren, indem Geliermittel zugefügt werden. Die zweite o.g. Aufgabe wird daher durch einen Trockenmörtel umfassend Zement, Feinstzement als Feinstkomponente und ein Geliermittel, ausgewählt unter Ton, hydrophiler Kieselsäure, hochdisperser Kieselsäure, Biopolymeren und Gemischen von zwei oder mehreren davon, gelöst.

Eine Menge Geliermittel im Bereich von 0,001 bis 1 Gew.-% bezogen auf die Trockenmasse der Mörtelslurry, insbesondere von 0,005 bis 0,25 Gew.-%, reicht dabei aus, um eine thixotrope Mörtelslurry zu erhalten. Diese hört sehr schnell nach dem Einfüllen auf zu Fließen, so dass sie auf Gefällestrecken und bei "undichtem" Traggerüst nicht oder in vernachlässigbar geringer Menge abfließt. Durch Zufuhr von Scherenergie, z.B. durch Rühren, kann sie aber bis zur Erstarrung/Erhärtung jederzeit wieder dünnflüssig gemacht werden. Damit ist sie ideal geeignet, auf Gefällestrecken auch in großen Abschnitten auf einmal eingebaut zu werden.

Die übrigen Bestandteile der Mörtelslurry werden wie oben beschrieben gewählt, so dass diese nicht nur thixotrop sondern auch bei höheren Temperaturen einbaubar ist. Für die Variante der thixotropen Mörtelslurry ist eine Verarbeitung von 55°C bis zu einer maximalen Temperatur von 60 °C möglich. Das ist zwar geringer als bei der erfindungsgemäßen, temperaturstabilen aber nicht thixotropen Mörtelslurry, jedoch wesentlich höher als für bisher übliche Mörtelslurries. Dabei ist zu berücksichtigen, dass die Abkühlung des frisch eingebrachten Asphalts nicht linear verläuft, sondern sich mit abnehmendem Temperaturunterschied zwischen Asphalttraggerüst und Umgebung verlangsamt. Somit kann auch die thixotrope Mörtelslurry bereits nach einer im Vergleich zum Stand der Technik wesentlich verringerten Abkühlzeit eingebaut werden.

Bevorzugte Geliermittel sind Ton, beispielsweise Bentonit, pyrogene Kieselsäure mit hydrophiler Oberfläche und Biopolymere, insbesondere Stärke und Polysaccharide, sowie Gemische von mindestens zwei davon.

Besonders bevorzugte Zusammensetzungen für Mörtelslurries sind in Tabelle 2 angegeben.

**Tabelle 2**

| **Trockensubstanz** | **Anteil [Gew.-%]** | **bevorzugter Anteil [Gew.-%]** |
|---|---|---|
| Zement | 62 - 99,5 | 88 - 94 |
| Zusatzstoffe | 0 - 35 | 3 - 10 |
| verflüssigende Zusatzmittel | 0,5 - 5 | 0,6 - 1 |
| verzögernde Zusatzmittel | 0,01 - 2 | 0,01 - 0,05 |
| Geliermittel | 0,001 - 1 | 0,005 - 0,25 |

Erfindungsgemäß können halbstarre Beläge auf Tragschichten erstellt werden, indem auf diese zuerst ein Asphalttraggerüst mit einem Hohlraumanteil im Bereich von 10 bis 40 Vol.-% aufgebracht wird. Dann wird eine Mörtelslurry bereitgestellt, indem ein erfindungsgemäßer Trockenmörtel mit Wasser angemacht wird. Die notwendigen bzw. gewünschten Komponenten sind bis auf das Wasser bevorzugt trocken und vorzugsweise im Trockenmörtel enthalten. Eine oder mehrere Komponenten können aber auch beim Anmachen mit Wasser in diesem oder davor, zugleich oder danach zugefügt werden. Die erhaltene, erfindungsgemäße Mörtelslurry kann schon ab einer Temperatur des Asphalttraggerüstes von 80 °C, bzw. 60 °C bei einem Gehahlt an Geliermittel, auf das Asphalttraggerüst aufgebracht werden und verfüllt dann den Hohlraumanteil vollständig. Sind Geliermittel enthalten, kann auch auf Gefällestrecken ein großflächiger Einbau ohne aufwändige Nachbearbeitung erfolgen.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

Für die Beispiele wurden die folgenden Substanzen verwendet:
Zement: CEM I 52.5 R
Mineralstoff: inerter Mineralstofffüller aus der Stoffgruppe der Erdalkalikarbonate, Dichte ≥ 2,60 g/cm³, Partikelgröße ≤ 0,1 mm
Verflüssiger A: modifizierter Polycarboxylatether
Verflüssiger B: modifizierter Polycarboxylatether
Geliermittel A: Tone mit den Hauptmineralen: Kaolinit, Illit, Montmorillonit
Geliermittel B: Biopolymere
Geliermittel C: Hydrophile pyrogene Kieselsäure
Verzögerer: Phosphat/Sacharose Gemisch
Aus den in den Tabellen 3 und 4 angegebenen Komponenten in der genannten Menge in Gew.-% bezogen auf die Trockensubstanz wurden unter Zusatz von Wasser im angegeben Verhältnis Mörtelslurries hergestellt. Die Eigenschaften des Frischmörtels und des Festmörtels wurden jeweils gemäß den bereits genannten Verfahren ermittelt und sind in den Tabellen 5 und 6 angegeben.

Außerdem wurde mittels einer eigens entwickelten Vorrichtung und Verfahrens die Ausfließneigung der Mörtelslurries bestimmt. Es handelt sich bei der Vorrichtung um einen in zwei Kammern unterteilten Behälter, z.B. einen Kasten. In einen Bereich des Behälters ist ein Asphalttraggerüst eingebaut, das vorzugsweise dem entspricht, das mit der zu prüfenden Mörtelslurry verfüllt werden soll. Die Kammern sind zu Beginn der Prüfung mit einem Schieber und einer asphaltseitigen Dichtung unterteilt. In die mit Asphalt vorbereitete Kammer wird mindestens eine solche Menge an Mörtelslurry gegeben, dass sie ausreicht um das Asphalttraggerüst zu verfüllen. Nach Ablauf einer gewählten Zeit, z.B. einer Stunde, wird der Schieber hochgezogen und die Dichtung entfernt. Es wird optisch beurteilt, wie weit die Mörtelslurry aus dem Asphalttraggerüst abfließt, wenn dem System keine weitere Scherenergie zugeführt wird. Die Ergebnisse sind in Tabelle 5 aufgenommen. Die Angabe "ja" für die Retention bedeutet, dass keine merkliche Menge Slurry ausgeflossen ist, "nein" bedeutet das Ausfließen einer größeren Menge, die eine Nachverfüllung von Hohlräumen erforderlich macht.

**Tabelle 3: Zusammensetzungen temperaturstabile Mörtelslurry**

| | **MS 1** | **MS 2** | **MS 3** | **MS 4** | **MS 5** | **MS 6** |
|---|---|---|---|---|---|---|
| Zement | 99,25 | 99,25 | 99,0 | 99,0 | 99,23 | 89,25 |
| Mineralstoff | - | - | - | - | - | 10 |
| Verflüssiger A | 0,75 | 0,75 | - | 1,0 | 0,75 | 0,75 |
| Verflüssiger B | | | 1,0 | - | - | - |
| Verzögerer | - | - | - | - | 0,02 | - |
| Trockensubstanz: Wasser | 1:0,29 | 1:0,31 | 1:0,29 | 1:0,29 | 1:0,30 | 1:0,29 |

**Tabelle 4: Zusammensetzungen thixotrope Mörtelslurry**

| | **MS 7** | **MS 8** | **MS 9** |
|---|---|---|---|
| Zement | 89,00 | 88,85 | 89,24 |
| Mineralstoff | 10,00 | 10,00 | 10,00 |
| Verflüssiger A | 0,65 | 0,65 | 0,75 |
| Geliermittel A | 0,35 | - | - |
| Geliermittel B | - | 0,50 | |
| Geliermittel C | - | - | 0,01 |
| Trockensubstanz: Wasser | 1 : 0,30 | 1 : 0,29 | 1 : 0,30 |

**Tabelle 5: Prüfergebnisse temperaturstabile Mörtelslurry**

| **Eigenschaft** | **Zeitpunkt** | **MS 1** | **MS 2** | **MS 3** | **MS 4** | **MS 5** | **MS 6** |
|---|---|---|---|---|---|---|---|
| Auslaufzeit | nach dem Mischen | 20 s | 19 s | 27 s | 30 s | 16 s | 22 s |
| | nach 1 h | 48 s | 37 s | 42 s | 53 s | 33 s | 52 s |
| Druckfestigkeit in N/mm² | 24 h | 97,2 | 56,8 | 57,7 | 53,3 | 83,0 | 59,1 |
| | 3 d | 104,7 | 78,2 | 78,6 | 74,9 | 82,2 | 73,8. |
| | 28 d | 143,8 | 106,9 | 104,6 | 103,4 | 101,9 | 102,0 |
| Biegezugfestigkeit in N/mm² | 24 h | >15 | 6,5 | 12,6 | 9,7 | 10,5 | 9,8 |
| | 3 d | >15 | 11,2 | >15 | 14,3 | 11,7 | 13,0 |
| | 28 d | >15 | 14,2 | >15 | <15 | 13,0 | 12,8 |

**Tabelle 6: Prüfergebnisse thixotrope Mörtelslurry**

| **Eigenschaft** | **Zeitpunkt** | **MS 7** | **MS 8** | **MS 9** |
|---|---|---|---|---|
| Auslaufzeit | nach dem Mischen | 42 s | 43 s | 40 s |
| | nach 1 h | 54 s | 44 s | 44 s |
| Druckfestigkeit in N/mm² | 24 h | 64,2 | 61,0 | 56,5 |
| | 3 d | 84,1 | 76,9 | 68,8 |
| | 28 d | 116,7 | 107,1 | 106,1 |
| Biegezug-festigkeit in N/mm² | 24 h | 7,1 | 10,4 | 7,3 |
| | 3 d | 12,6 | 10,0 | 12,7 |
| | 28 d | 13,2 | 13,4 | 14,1 |
| Retention | nach 1 h | ja | ja | ja |

Aus den Messergebnissen in Tabellen 5 und 6 wird deutlich, dass die erfindungsgemäßen Mörtelslurries die Aufgaben lösen. Die Eigenschaften der Mörtelslurries entsprechen den Anforderungen des Merkblattes hinsichtlich der Verarbeitungseigenschaften des Frischmörtels und den mechanischen Eigenschaften des Festmörtels.

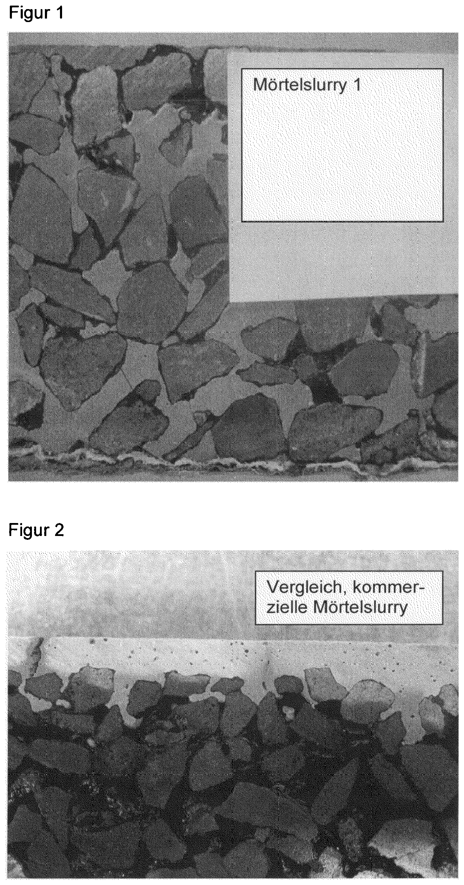

Wie anhand von Probenquerschnitten bestätigt wurde, füllt die temperaturstabile Mörtelslurry auch bei 80 °C heißem Asphalt die Hohlräume zuverlässig und vollständig aus. In Figur 1 ist ein Schnitt für die bei 80 °C Asphalttemperatur eingebrachte Mörtelslurry 1 gezeigt. Figur 2 zeigt zum Vergleich das Resultat bei Verwendung einer Mörtelslurry aus einem kommerziell erhältlichen, Silikastaub enthaltenden Trockenmörtel. Deutlich ist zu sehen, dass die bei 80 °C aufgebrachte Vergleichs-Mörtelslurry kaum in das Asphalttraggerüst eindringen kann, brauchbare Beläge werden so nicht erhalten.

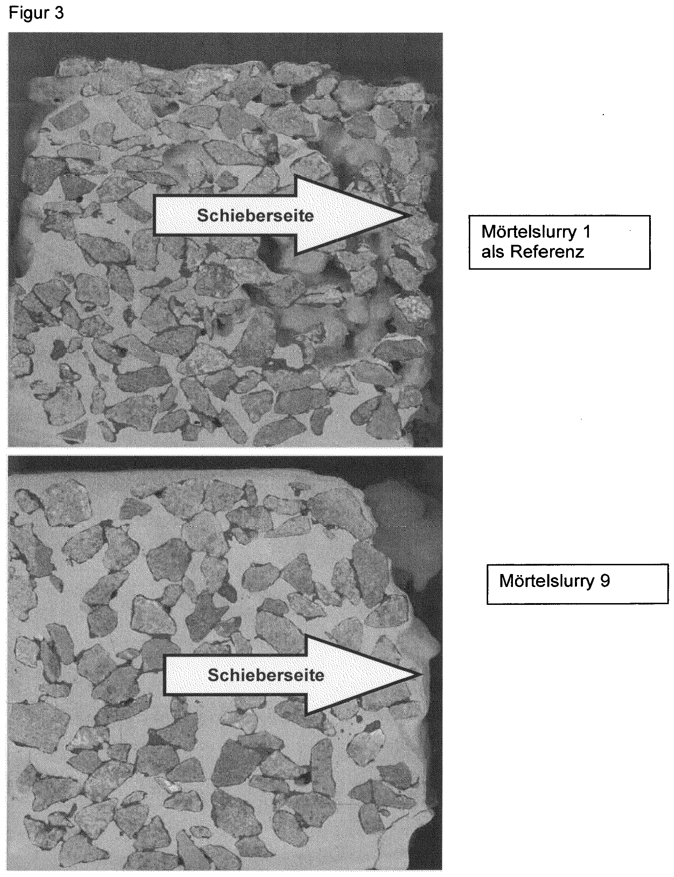

Die thixotrope Mörtelslurry kann bei 60 °C und darunter ebenfalls die Hohlräume zuverlässig und vollständig füllen. Dabei zeigt sie bereits nach kurzer Zeit ein stark vermindertes Fließen. In Figur 3 sind die Ergebnisse des beschriebenen, neu entwickelten Verfahrens für die Mörtelslurry 1 als Referenz und die Mörtelslurry 9 gezeigt. Es ist gut zu erkennen, dass die Mörtelslurry 1 ohne Geliermittel über einen großen Bereich aus dem Traggerüst abfließt, während bei der Mörtelslurry 9 mit Geliermittel kein Abfließen erkennbar ist.

Die beschriebenen halbstarren Beläge sind geeignet für Deckschichten auf besonders beanspruchten Verkehrsflächen, wie z.B. Standflächen für Schwerlastfahrzeuge, Busverkehrsflächen, Felder vor Signalanlagen, Industrieflächen wie zum Beispiel Container Terminals, Hafen-Kaianlagen, Flugfelder und Lagerhallenböden. Das System kann ebenfalls im Bereich von Betankungsanlagen sowie für Lager-, Abfüll- und Umschlagflächen für wassergefährdende Stoffe eingesetzt werden. Das System wird auf einer Unterlage aus Asphalt oder einer hydraulisch gebunden Tragschicht aufgebracht. Es kann beim Neubau sowie bei einer Renovierung bzw. Bauwerksertüchtigung zum Einsatz kommen. Dabei lassen sich beim Einbau signifkante Zeitersparnisse realisieren. Bei den thixotropen Mörtelslurries ergibt sich eine höhere Fehlertoleranz in Bezug auf "undichte" Asphalttraggerüste und ein erleichterter und schnellerer Einbau bei Gefällestrecken. Es erscheint auch möglich, Strecken mit einem größeren Gefälle als bisher zugelassen mit dem halbstarren Belag zu versehen.

## Patentansprüche

1. Trockenmörtel umfassend Zement und eine Feinstkomponente, der mit Wasser zu einer Mörtelslurry vermischbar ist, **dadurch gekennzeichnet, dass** die Feinstkomponente Feinstzement ist und kein Silikastaub enthalten ist und der Trockenmörtel zumindest ein Fließmittel enthält und/oder zumindest ein Fließmittel im Wasser enthalten ist oder beim Anmachen mit Wasser zugefügt wird, wobei mindestens 62 Gew.-% Zement enthalten sind, die Mörtelslurry ein Verhältnis Trockensubstanz:Wasser im Bereich von 1:0,28 bis 1:0,36 aufweist und die Druckfestigkeit des Festmörtels aus der Mörtelslurry nach 28 Tagen mindestens 100 N/mm² beträgt.

2. Trockenmörtel gemäß Anspruch 1, **dadurch gekennzeichnet, dass** mindestens 88 Gew.-% Zement enthalten sind.

3. Trockenmörtel gemäß Anspruch 1 oder 2, **dadurch gekennzeichnet, dass** keine Gesteinskörnung enthalten ist.

4. Trockenmörtel gemäß Anspruch 1, 2 oder 3, **dadurch gekennzeichnet, dass** ein Geliermittel enthalten ist.

5. Trockenmörtel gemäß Anspruch 4, **dadurch gekennzeichnet, dass** das Geliermittel ausgewählt ist unter Ton, pyrogener Kieselsäure, hochdisperser Kieselsäure, Biopolymeren und Gemischen davon.

6. Trockenmörtel gemäß Anspruch 4 oder 5, **dadurch gekennzeichnet, dass** das Geliermittel in einer Menge im Bereich von 0,001 bis 1 Gew.-%, vorzugsweise 0,005 bis 0,25 Gew.-%, bezogen auf die Trockensubstanz enthalten ist.

7. Trockenmörtel gemäß mindestens einem der Ansprüche 1 bis 6, **dadurch gekennzeichnet, dass** er ein oder mehrere verflüssigende Zusatzmittel enthält, vorzugsweise ausgewählt unter Verflüssigern auf Basis von Ligninsulfonaten, Melaminharzen, (Poly-)Naphthalinsulfonaten, als Polycarboxylatether (PCE) bezeichneten Stoffen oder Stoffgemischen, Acryl-basierten Stoffen oder Stoffgemischen, Vinyl-basierten Stoffen oder Stoffgemischen, Carbonsäure-basierten Stoffen oder Stoffgemischen, sowie Derivaten und Mischungen von zwei oder mehreren davon.

8. Trockenmörtel gemäß Anspruch 7, **dadurch gekennzeichnet, dass** das oder die verflüssigenden Zusatzmittel in einer Menge im Bereich von 0,5 bis 5 Gew.-%, vorzugsweise 0,6 bis 1 Gew.-%, bezogen auf die Trockensubstanz, enthalten ist/sind.

9. Trockenmörtel gemäß mindestens einem der Ansprüche 1 bis 8, **dadurch gekennzeichnet, dass** der Zement ausgewählt ist unter Portlandzement und Portlandzement im Gemisch mit latent-hydraulischen und/oder puzzolanischen Materialien, insbesondere der Zementklassen CEM II/A, CEM II/B, CEM III/A, CEM IV/A und CEM V/A mit Ausnahme von CEM II/A-D.

10. Trockenmörtel gemäß mindestens einem der Ansprüche 1 bis 9, **dadurch gekennzeichnet, dass** der Trockenmörtel inerte Füllstoffe enthält, insbesondere Kalksteinmehl.

11. Trockenmörtel gemäß mindestens einem der Ansprüche 1 bis 10, **dadurch gekennzeichnet, dass** ein oder mehrere Verzögerer, vorzugsweise Gluconate und/oder Phosphat/Sacharose, enthalten ist/sind.

12. Mörtelslurry erhältlich durch Mischen eines Trockenmörtels gemäß einem der Ansprüche 1 bis 11 mit Wasser, wobei der Trockenmörtel zumindest ein Fließmittel enthält und/oder zumindest ein Fließmittel im Wasser enthalten ist oder beim Anmachen mit Wasser zugefügt wird und die Mörtelslurry ein Verhältnis Trockensubstanz:Wasser im Bereich von 1:0,28 bis 1:0,36 aufweist.

13. Mörtelslurry gemäß Anspruch 12, **dadurch gekennzeichnet, dass** ausschließlich ein Trockenmörtel gemäß einem der Ansprüche 1 bis 11 und Wasser enthalten sind, wobei der Trockenmörtel zumindest ein Fließmittel enthält.

14. Verfahren zur Erstellung eines halbstarren Belages auf einer Tragschicht, umfassend die Schritte
Aufbringen eines Asphalttraggerüstes mit einem Hohlraumanteil im Bereich von 10 bis 40 Vol.-%
Bereitstellen einer Mörtelslurry aus einem Trockenmörtel gemäß einem der Ansprüche 1 bis 11, indem der Trockenmörtel mit Wasser im Verhältnis Trockensubstanz:Wasser im Bereich von 1:0,28 bis 1:0,36 zu der Mörtelslurry vermischt wird, wobei in der Mörtelslurry kein Silikastaub enthalten ist und der Trockenmörtel zumindest ein Fließmittel enthält und/oder zumindest ein Fließmittel im Wasser enthalten ist oder mit dem Wasser zugefügt wird,
**dadurch gekennzeichnet, dass**
die Mörtelslurry bei einer Temperatur des Asphalttraggerüstes von 55 bis 80 °C aufgebracht wird.

15. Verfahren gemäß Anspruch 14, **dadurch gekennzeichnet, dass** die Tragschicht eine Tragschicht mit Gefälle ist, der Trockenmörtel ein Geliermittel enthält und die Mörtelslurry bei einer Temperatur des Asphalttraggerüstes von 55 bis 60 °C aufgebracht wird.

## Claims

1. Dry mortar comprising cement and a very fine component, which is able to be mixed to form a mortar slurry, wherein no silica fume is contained and the dry mortar contains at least one plasticizer and/or at least one plasticizer is contained in the water or is added during mixing with water, wherein at least 62 % by weight cement is contained, the mortar slurry has a ratio dry substance:water in the range from 1:0.28 to 1:0.36, and the compressive strength of the hardened mortar from the mortar slurry is at least 100 N/mm² after 28 days.

2. Dry mortar according to claim 1, **characterised in that** at least 88 % by weight cement is contained.

3. Dry mortar according to claim 1 or 2, **characterised in that** no aggregate is contained.

4. Dry mortar according to claim 1, 2 or 3, **characterised in that** a gelling agent is contained.

5. Dry mortar according to claim 4, **characterised in that** the gelling agent is selected from clay, pyrogenic silica, highly dispersed silica, biopolymers and mixtures thereof.

6. Dry mortar according to claim 4 or 5, **characterised in that** the gelling agent is contained in a quantity in the range from 0.001 to 1 % by weight, preferably 0.005 to 0.25 % by weight based on the dry substance.

7. Dry mortar according to at least one of claims 1 to 6, **characterised in that** it contains one or more liquefying admixtures, preferably selected from plasticizers based on lignosulphonates, melamine resins, (poly)naphthalene sulphonates, substances or substance mixtures referred to as polycarboxylate ethers (PCE), acrylic-based substances or substance mixtures, vinyl-based substances or substance mixtures, carboxylic acid-based substances or substance mixtures, as well as derivatives and mixtures of two or more thereof.

8. Dry mortar according to claim 7, **characterised in that** the liquefying admixture(s) is/are contained in a quantity in the range from 0.5 to 5 % by weight, preferably 0.6 to 1 % by weight, based on the dry substance.

9. Dry mortar according to at least one of claims 1 to 8, **characterised in that** the cement is selected from Portland cement and Portland cement mixed with latent hydraulic and/or pozzolanic materials, in particular of cement classes CEM II/A, CEM II/B, CEM III/A, CEM IV/A and CEM V/A with the exception of CEM II/A-D.

10. Dry mortar according to at least one of claims 1 to 9, **characterised in that** the dry mortar contains inert filling materials, in particular limestone powder.

11. Dry mortar according to at least one of claims 1 to 10, **characterised in that** one or more retarder(s), preferably gluconates and/or phosphate/sucrose, is/are contained.

12. Mortar slurry obtainable by mixing a dry mortar according to one of claims 1 to 11 with water, wherein the dry mortar contains at least one plasticizer and/or at least one platicizer is contained in the water or added during mixing with water and the mortar slurry has a ratio dry substance:water in the range from 1:0.28 to 1:0.36.

13. Mortar slurry according to claim 12, **characterised in that** only a dry mortar according to one of claims 1 to 11 and water are contained, wherein the dry mortar contains at least one plasticizer.

14. Method for manufacturing a semi-rigid coating on a support structure, comprising the steps
applying an asphalt support structure with a void content in the range from 10 to 40 % by volume
providing a mortar slurry from a dry mortar according to one of claims 1 to 11, wherein the dry mortar is mixed with water in a ratio dry substance:water in the range from 1:0.28 to 1:0.36 to form the mortar slurry, wherein no silica fume is contained in the mortar slurry and the dry mortar contains at least one plasticizer and/or at least one plasticizer is contained in the water or is added with the water,
**characterised in that**
the mortar slurry is applied at a temperature of the asphalt support structure of 55 to 80 °C.

15. Method according to claim 14, **characterized in that** the support structure is a sloping support structure, the dry mortar contains a gelling agent and the mortar slurry is applied at a temperature of the asphalt support structure of 55 to 60 °C.

## Revendications

1. Mortier sec comprenant du ciment et un composant fin, qui peut être mélangé avec de l'eau en une suspension de mortier, **caractérisé en ce que** le composant fin est du ciment fin et aucune poussière de silice n'est contenue et le mortier sec contient au moins un fluidifiant et/ou au moins un fluidifiant est contenu dans l'eau ou ajouté lors du gâchage à l'eau, au moins 62 % en poids de ciment étant contenus, la suspension de mortier présentant un rapport matière sèche:eau dans la plage de 1:0,28 à 1:0,36 et la résistance à la compression du mortier solide obtenu à partir de la suspension de mortier après 28 jours valant au moins 100 N/mm².

2. Mortier sec selon la revendication 1, **caractérisé en ce qu'**il contient au moins 88 % en poids de ciment.

3. Mortier sec selon la revendication 1 ou 2, **caractérisé en ce qu'**il ne contient pas d'agrégat minéral.

4. Mortier sec selon la revendication 1, 2 ou 3, **caractérisé en ce qu'**il contient un gélifiant.

5. Mortier sec selon la revendication 4, **caractérisé en ce que** le gélifiant est choisi parmi l'argile, la silice pyrogène, la silice hautement dispersée, les biopolymères et leurs mélanges.

6. Mortier sec selon la revendication 4 ou 5, **caractérisé en ce que** le gélifiant est contenu en une quantité dans la plage de 0,001 à 1 % en poids, de préférence de 0,005 à 0,25 % en poids, par rapport à la matière sèche.

7. Mortier sec selon au moins l'une quelconque des revendications 1 à 6, **caractérisé en ce qu'**il contient un ou plusieurs additifs fluidifiants, de préférence choisis parmi les fluidifiants à base de ligninesulfonates, de résines de mélamine, de (poly-)naphtalènesulfonates, de substances ou de mélanges de substances appelé(e)s polycarboxylate-éthers (PCE), de substances ou de mélanges de substances à base d'acryle, de substances ou de mélanges de substances à base de vinyle, de substances ou de mélanges de substances à base d'acide carboxylique, ainsi que des dérivés et des mélanges de deux ou plus de ceux-ci.

8. Mortier sec selon la revendication 7, **caractérisé en ce que** le ou les additifs fluidifiants est/sont contenu(s) en une quantité dans la plage de 0,5 à 5 % en poids, de préférence de 0,6 à 1 % en poids, par rapport à la matière sèche.

9. Mortier sec selon au moins l'une quelconque des revendications 1 à 8, **caractérisé en ce que** le ciment est choisi parmi le ciment Portland et le ciment Portland en mélange avec des matériaux hydrauliques latents et/ou pouzzolaniques, en particulier des classes de ciment CEM II/A, CEM II/B, CEM III/A, CEM IV/A et CEM V/A à l'exception de CEM II/A-D.

10. Mortier sec selon au moins l'une quelconque des revendications 1 à 9, **caractérisé en ce que** le mortier sec contient des charges inertes, en particulier du calcaire en poudre.

11. Mortier sec selon au moins l'une quelconque des revendications 1 à 10, **caractérisé en ce qu'**il contient un ou plusieurs retardateurs, de préférence des gluconates et/ou du phosphate/saccharose.

12. Suspension de mortier pouvant être obtenue par mélange d'un mortier sec selon l'une quelconque des revendications 1 à 11 avec de l'eau, le mortier sec contenant au moins un fluidifiant et/ou au moins un fluidifiant étant contenu dans l'eau ou ajouté lors du gâchage à l'eau et la suspension de mortier présentant un rapport matière sèche:eau dans la plage de 1:0,28 à 1:0,36.

13. Suspension de mortier selon la revendication 12, **caractérisé en ce qu'**elle contient exclusivement un mortier sec selon l'une quelconque des revendications 1 à 11 et de l'eau, le mortier sec contenant au moins un fluidifiant.

14. Procédé pour la réalisation d'un revêtement semi-rigide sur une couche support, comprenant les étapes de
application d'une structure support en asphalte, présentant une proportion d'espaces creux dans la plage de 10 à 40 % en volume,
mise à disposition d'une suspension de mortier constitué par un mortier sec selon l'une quelconque des revendications 1 à 11, en ce que le mortier sec est mélangé avec de l'eau dans un rapport matière sèche:eau dans la plage de 1:0,28 à 1:0,36 en une suspension de mortier, la suspension de mortier ne comprenant pas de poussière de silice et le mortier sec contenant au moins un fluidifiant et/ou au moins un fluidifiant étant contenu dans l'eau ou ajouté conjointement avec l'eau, **caractérisé en ce que** la suspension de mortier est appliquée à une température de la structure support en asphalte de 55 à 80 °C.

15. Procédé selon la revendication 14, **caractérisé en ce que** la couche support est une couche support présentant une pente, le mortier sec contient un gélifiant et la suspension de mortier est appliquée à une température de la structure support en asphalte de 55 à 60 °C.
